# DEMANDE DE BREVET EUROPEEN

(11) **EP 1 801 608 A1**
(43) Date de publication de la demande: **27.06.2007**
(21) Numéro de dépôt: 05301083.1
(22) Date de dépôt: 20.12.2005
(51) Int. Cl.: G01S 1/00, G01S 5/14

(54) **Procédé et système de pré-localisation pour l'assistance aux systèmes de radio-navigation par satellites**

(71) Demandeur: Alcatel Lucent, 75008 Paris (FR)
(72) Inventeur: Monnerat, Michel, 31240 L´UNION (FR)
(74) Mandataire: Korakis-Ménager, Sophie

(57) **Abrégé**

Un terminal de radio-navigation par satellites utilisant les services d'un réseau de communication cellulaire, la pré-localisation consistant à localiser le terminal dans au moins une cellule du réseau :
- on réalise une base de données (24) compilant des informations de localisations des cellules du réseau fournies par les terminaux (4) du réseau cellulaire, cette base comportant pour chaque cellule au moins un identifiant et une information sur sa localisation ;
- on effectue la pré-localisation (23) du terminal en fonction de son identifiant et des informations contenues dans la base de données.

L'invention s'applique notamment pour les systèmes de positionnement par satellite combinant les techniques de communication par satellite et les techniques de localisation par satellite tels que le système A-GPS par exemple.

## Description

La présente invention concerne un procédé et un système de pré-localisation pour l'assistance aux systèmes de radio-navigation par satellites. L'invention concerne également un terminal de téléphonie mobile équipé d'un système de réception de radio-navigation par satellite. Elle s'applique notamment pour les systèmes de positionnement par satellite combinant les techniques de communication par satellite et les techniques de localisation par satellite tels que le système A-GPS par exemple.

Les services de localisation prennent de plus en plus d'importance dans les applications de télécommunications. On connaît les systèmes de positionnement par satellite de type RNSS pour « Radio Navigation Satellite Service », comme par exemple le système GPS, le système GLONASS ou encore le futur système GALILEO. Ces systèmes comportent une constellation de satellites en mouvement autour de la Terre. Dans un système de positionnement par satellites, la localisation d'un récepteur, c'est-à-dire la détermination de ses coordonnées d'espace, s'effectue de façon connue par la détermination du temps de propagation d'une onde hyperfréquence particulière entre chaque satellite et ce récepteur, le temps de propagation permettant de déterminer la distance de l'objet au satellite. La connaissance de la distance par rapport à au moins quatre satellites, ainsi que la position des satellites eux-mêmes, permet ensuite de déterminer la position du récepteur.
Une première étape essentielle qui conditionne les performances du système est l'étape d'acquisition des signaux provenant des satellites. En particulier, cette étape d'acquisition consiste à déterminer au niveau du récepteur concerné les codes pseudo-aléatoires qui modulent des signaux provenant de satellites, dits « en vue », appartenant à une constellation de satellites de positionnement et rapportés à un temps de référence, généralement appelé « temps système ». Il s'agit en fait de comparer les signaux reçus de satellites en vue à des répliques de signaux résultant d'hypothèses sur le temps système et sur la fréquence de cadencement des satellites, afin d'en déduire les codes pseudo-aléatoires qui modulent lesdits signaux reçus ou en d'autres termes de synchroniser l'horloge de cadencement du terminal et sa fréquence sur l'horloge et la fréquence de chaque satellite en vue. Pour ce faire, on effectue habituellement des mesures de corrélation reposant sur des couples d'hypothèses temporelles et fréquentielles.
Une fois l'acquisition réalisée, une étape suivante détermine la position du récepteur à partir des codes acquis et de données de navigation notamment contenues dans les signaux reçus. Ces données de navigation sont par exemple le temps des satellites, leur instant d'émission et les éphémérides du satellite de positionnement qui les a émis. Dans cette étape on commence par déterminer à partir des codes pseudo-aléatoires acquis les temps de propagation des signaux entre chacun des satellites en vue et le récepteur, puis à partir des données de navigation contenues dans les signaux et des temps de propagation on détermine les distances entre le récepteur et les satellites.
Ces techniques présentent des limitations bien connues. Une première limitation est liée à la phase d'acquisition. Dans cette phase d'acquisition, un récepteur doit scanner une plage de fréquences données pour accrocher un signal émis par un satellite. Or, il existe une bande de fréquences d'incertitude relativement importante inhérentes au système de positionnement par satellite. Cette incertitude peut atteindre environ 15 kHz et allonge le temps d'acquisition, performance clé du système. Cette incertitude est essentiellement due à trois facteurs bien connus. Un effet Doppler dû aux déplacements des satellites, un effet Doppler dû aux mouvements des utilisateurs donc des récepteurs et enfin une incertitude due à l'erreur de l'horloge locale du récepteur. A cette incertitude en fréquences s'ajoute une incertitude de temps qui intervient dans la phase de détermination de la position du récepteur. Cette incertitude de temps est fonction de la périodicité de l'émission du code pseudo-aléatoire par les satellites. Elle peut atteindre 30 secondes, ce qui implique dans ce cas qu'il est nécessaire d'attendre au moins cette durée pour connaître la position d'un satellite. Cette incertitude en fréquence et cette incertitude de temps allonge donc le temps d'acquisition et dégrade la sensibilité des récepteurs.
Ces limitations sont surmontées par les techniques d'assistance à la radio-navigation par satellites. Les systèmes de radio-navigation assistés combinent les techniques de téléphonies mobiles et les techniques de positionnement par satellites, tels que le système A-GPS par exemple et plus généralement les systèmes A-GNSS. Ces systèmes combinent un récepteur de positionnement par satellite avec un terminal de téléphonie mobile. Ils améliorent la sensibilité des récepteurs de positionnement et les temps d'acquisition. Ils présentent néanmoins des inconvénients dans la mesure où ils nécessitent les services d'un opérateur de téléphonie mobile, ce qui accroît en particulier les coûts de services pour les utilisateurs.

Un but de l'invention est notamment de pallier cet inconvénient. A cet effet, l'invention a pour objet un procédé de pré-localisation pour l'aide à la localisation d'un terminal de radio-navigation par satellites utilisant les services d'un réseau de communication cellulaire. La pré-localisation consistant à localiser le terminal dans au moins une cellule du réseau, le procédé comporte au moins :
- une phase de réalisation (21, 22) d'une base de données compilant des informations de localisations des cellules du réseau fournies par les terminaux du réseau cellulaire, cette base comportant au moins pour chaque cellule un identifiant et une information sur sa localisation ;
- une phase de pré-localisation (23) du terminal en fonction de son identifiant et des informations contenues dans la base de données.
La phase de réalisation de la base de données comporte par exemple une étape de collecte des informations de localisation, une information de localisation d'un terminal étant fournie à la base de données par ce terminal avec l'identifiant de la cellule qui le contient.
Dans la phase de pré-localisation, l'identifiant de la cellule contenant le terminal est par exemple comparé avec les identifiants stockés dans la base de données, le terminal étant pré-localisé dans la cellule dont l'identifiant de la base est égal à l'identifiant.
Dans le cas où un identifiant comporte l'identité numérique CI de la cellule et l'identité numérique LAC d'un groupement de cellules incluant cette cellule, avantageusement la phase de pré-localisation compare l'identité LAC du groupement de la cellule avec les identités LAC de regroupement stockés dans la base de données, le terminal étant pré localisé dans un groupement de cellules dont l'identité LAC est égale à l'identité LAC de regroupement de sa cellule.

Dans un mode de mise en oeuvre particulièrement avantageux, la base de données est stockée dans le terminal.

L'invention a également pour objet un système de pré-localisation pour l'aide à la localisation comportant un terminal de téléphonie mobile utilisant les services d'un réseau de communication cellulaire, ce terminal étant équipé d'un récepteur de radio-navigation par satellites. Ce système comporte une base de données compilant des informations de localisations de cellules du réseau fournies par les terminaux du réseau cellulaire, cette base comportant au moins pour chaque cellule un identifiant et une information sur sa localisation, le terminal déterminant sa pré-localisation en fonction de son identifiant et des informations contenues dans la base de données.
Une information de localisation d'un terminal du réseau de communication cellulaire est par exemple fournie par ce terminal à la base de données avec l'identifiant de la cellule qui le contient.
Pour le calcul de la pré-localisation, le terminal compare par exemple l'identifiant de la cellule contenant le terminal avec les identifiants stockés dans la base de données, le terminal étant pré-localisé dans la cellule dont l'identifiant de la base est égal à l'identifiant concerné.

L'invention a encore pour objet un terminal de téléphonie mobile utilisant les services d'un réseau de communication cellulaire, équipé d'un récepteur de radio-navigation par satellites. Ce terminal comporte une base de données compilant des informations de localisation de cellules du réseau fournies par le terminal, cette base comportant au moins pour chaque cellule un identifiant et une information sur sa localisation, le terminal déterminant sa pré-localisation en fonction de son identifiant et des informations contenues dans la base de données.
Le terminal fournit par exemple une information sur sa localisation à la base de données avec l'identifiant de la cellule qui le contient. Pour le calcul de la pré-localisation, il compare par exemple l'identifiant de la cellule contenant le terminal avec les identifiants stockés dans la base de données, le terminal étant pré-localisé dans la cellule dont l'identifiant de la base est égal à l'identifiant concerné.

D'autres caractéristiques et avantages de l'invention apparaîtront à l'aide de la description qui suit faite en regard de dessins annexés qui représentent :
- la figure 1, une illustration du principe de fonctionnement d'un système de radionavigation par satellite assisté ;
- la figure 2, un exemple de mise en oeuvre du procédé selon l'invention ;
- la figure 3, une représentation d'un identifiant d'une cellule dans un réseau de communication cellulaire utilisée par l'invention.

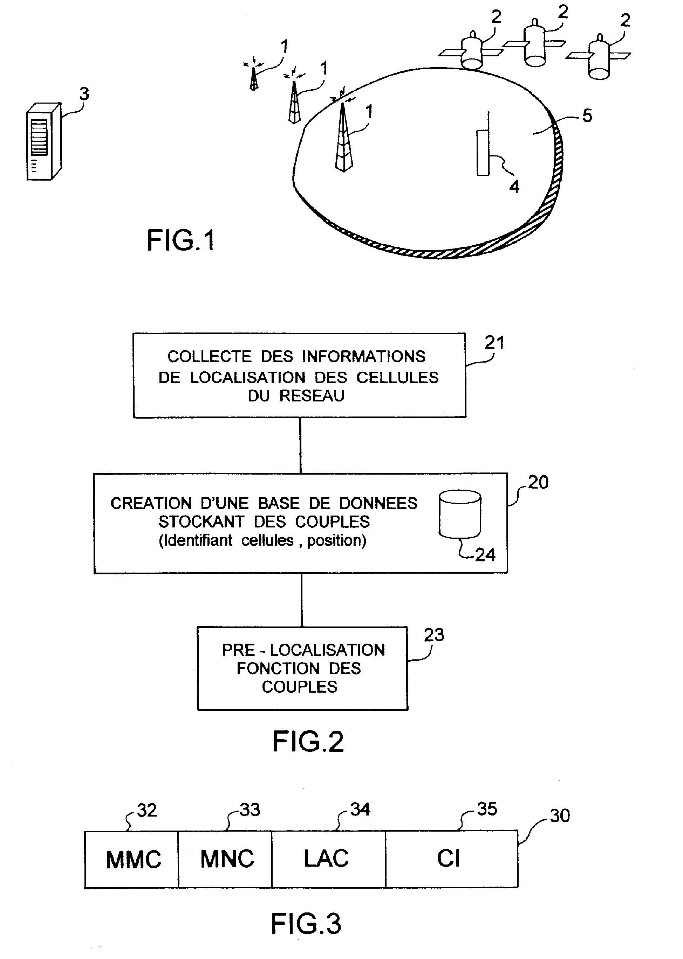

La figure 1 présente à titre d'exemple le principe d'un système de radionavigation par satellite assisté que l'on appellera A-GNSS par la suite selon l'expression anglo-saxonne « Assisted Global Navigation Satellite System ». Le système présenté par la figure 1 comporte un réseau cellulaire de communications mobiles matérialisé par des stations de base 1 et un réseau de positionnement par satellites matérialisé par une constellation de satellites 2. Dans le réseau de communication cellulaire chaque station de base est associée de façon connue à une cellule spatiale 5. Le réseau de communication cellulaire comporte par ailleurs un serveur d'assistance 3 communiquant avec les stations de base 2. Ce serveur d'assistance 3 comporte un récepteur de navigation capable de recevoir en permanence les signaux des satellites 2 et de les stocker dans sa base de données pour une durée pré-déterminée. Un terminal mobile 4 est situé à l'intérieur d'une cellule de communication 5 associée à une station de base. Ce terminal mobile est capable de recevoir au moins des signaux contenant des données de navigation du réseau de positionnement par satellites et des données du serveur d'assistance. Ce terminal est par exemple un terminal de téléphonie mobile équipé d'un récepteur de navigation par satellite, par exemple un récepteur GPS. On mentionnera par la suite indifféremment terminal ou téléphone mobile. Ce terminal peut adresser au serveur d'assistance 3 un message lui demandant de transmettre des données d'assistance. Le message requérant l'assistance est transmis de la même façon que des données classiques via le réseau de communication cellulaire. Il contient l'identifiant du téléphone mobile 4 concerné. Les données d'assistance fournies par le serveur d'assistance 3 donne au moins au récepteur de navigation par satellite la position du terminal de téléphonie mobile 4 qui le contient. Il peut aussi fournir la référence de temps de la constellation de satellites et les éphémérides des satellites. Toutes ces données permettent au récepteur de réduire le temps l'acquisition des signaux émis par les satellites et le temps de détermination de leurs positions, donc de sa position. Un exemple de mise en oeuvre d'un système A-GNSS est notamment décrit dans la demande de brevet français publiée sous le numéro 2 858 510.
Dans un tel système, les données d'assistance contiennent une information de pré-localisation d'un terminal 4 déduite de la position de la cellule 5 dans laquelle il se trouve lors de la transmission du message requérrant l'assistance. Cette information est en fait fournie par l'opérateur de téléphonie mobile qui connaît l'implantation de ses stations de bases. Le code de la station de base concernée est inséré dans chaque transaction qui permet à l'opérateur d'identifier et de localiser la station de base, donc la cellule dans laquelle se trouve le terminal requérrant l'assistance, la localisation de la cellule donnant finalement la pré-localisation pour le système A-GNSS. Dans certains cas il serait avantageux pour un utilisateur, ou plus généralement pour l'ensemble du système A-GNSS, de ne pas requérir les services d'un opérateur de téléphonie mobile. En particulier, pour au moins deux raisons :
- pouvoir accéder au service A-GNSS ou fournir un service A-GNSS sans contribution d'un opérateur de téléphonie mobile, et donc ne pas payer des taxes associées pour le service d'assistance ;
- s'affranchir du fait qu'il est impossible pour un opérateur de conserver de façon fiable une base de données relatives aux stations de base du fait que les stations peuvent être aussi mobiles.

La figure 2 présente des étapes possibles pour la mise en oeuvre d'un procédé selon l'invention. Dans cette mise en oeuvre on retrouve le réseau de positionnement par satellites 2 et le réseau de communication cellulaire 1 tels qu'illustrés par la figure 1 mais il n'est plus fait usage d'un serveur d'assistance 2 exploité par un opérateur de téléphonie mobile. La pré-localisation selon l'invention exploite une base de données comportant des informations de localisations des cellules 5 du réseau de communication cellulaire maintenue par les informations de localisations fournies par les utilisateurs eux-mêmes. Il s'agit d'un processus collaboratif où chaque utilisateur concourre à remplir la base de données.
Le procédé comporte une phase de réalisation de la base de données compilant des informations de localisations des cellules du réseau fournies par les terminaux 4 du réseau cellulaire. Cette base comporte au moins pour chaque cellule un identifiant et sa localisation. Le procédé comporte aussi une phase de pré-localisation 23 d'un terminal en fonction de son identifiant et des informations contenues dans la base de données.
La première phase peut être mise en oeuvre en deux étapes par exemple. Dans une première étape 21 on effectue la collecte des informations de localisation des cellules du réseau. La localisation d'une cellule 4 est en fait déterminée par la localisation de sa station de base 3. On pourrait néanmoins choisir un autre point de localisation.
Dans une deuxième étape 22 la base de données 24 est créée. Cette base de données stocke pour chaque cellule, sa position et des informations de localisation. Elle stocke par exemple ces données sous forme d'enregistrement de couples, chaque couple comportant un identifiant d'une cellule et sa position. Cette position étant par exemple la position de la station de base associée à la cellule. Cette deuxième étape 22 est suivie de la phase de pré-localisation 23.

La base de données 24 est par exemple stockée dans un serveur accessible via le réseau Internet. Lorsqu'un utilisateur demande une assistance pour la localisation, il envoie dans sa requête un identifiant de la cellule 5 dans laquelle se trouve son téléphone mobile 4. Le téléphone mobile accède facilement à cet identifiant car il est inséré dans chaque transaction qu'il effectue avec la station de base associée à sa cellule.

La figure 3 présente un exemple d'identifiant d'une cellule 5 d'un réseau de communication cellulaire. Plus particulièrement, la figure 3 présente un exemple d'identité numérique 30 d'une cellule. Une telle identité numérique est insérée dans chaque message de transaction entre un téléphone mobile 4 et la station de base avec laquelle il communique. L'identité numérique 30 comporte quatre champs. Un premier champ 31 identifie le pays du réseau et comporte donc un mot qui indique un code de pays, il est généralement nommé MCC selon l'expression anglo-saxonne « Mobile Country Code ». Un deuxième champ 32 identifie le réseau et comporte le code du réseau, il est généralement nommé MNC selon l'expression anglo-saxonne « Mobile Network Code ». Un troisième champ 33 identifie une aire géographique regroupant plusieurs cellules incluant la cellule elle-même et comporte un code identifiant cette aire, il est généralement nommé LAC conformément à l'expression anglo-saxonne « Location Area Code ». Enfin un quatrième champ 34 identifie la cellule elle-même à l'intérieur de réseau cellulaire par un code nommé généralement CI selon l'expression anglo-saxonne « Cell Identity ». Ce code représente en fait l'identité propre à la cellule.
La création d'un couple (Identifiant de cellule, position) est réalisée à partir de l'information de position donnée par un téléphone mobile qu'il a obtenu à l'aide de son récepteur de navigation par satellite. Cette position est envoyée par un message au serveur qui la stocke avec l'identifiant de la cellule. L'étape de collecte 21 des informations de localisation se fait donc par la transmission des données de positions calculées par les récepteurs des téléphones mobiles au serveur. Puis l'étape 22 de création de la base se fait pour chaque cellule, par l'enregistrement de l'information de position du téléphone mobile donc de la cellule qui le contient.
Avantageusement un identifiant 31 du type de la figure 3 permet plusieurs niveaux de pré-localisation. Si la position d'une cellule a déjà été enregistrée, un utilisateur qui demandera assistance au serveur comportant la base de donnée 24 pourra déterminer la position de la cellule grâce à son identifiant 30 qui sera associé à la position de la cellule dans la base. Cette position de la cellule lui donnera sa pré-localisation, la précision étant donnée par la taille de la cellule elle-même. Cette pré-localisation est effectuée dans l'étape 23 de pré-localisation où le téléphone mobile récupère la position de la cellule dans la base à partir du couple (Identifiant de cellule, position) par exemple. Pour cela, le téléphone mobile scrute toute la base de données 24 jusqu'à ce qu'il détecte par comparaison l'identifiant de sa cellule, en particulier l'identité numérique CI de cette dernière.
Si la cellule dans laquelle se trouve l'utilisateur n'a pas encore été enregistrée, l'utilisateur ne peut pas encore se pré-localiser avec la base de donnée 24, il pourra seulement l'enrichir. Néanmoins, s'il est dans une cellule voisine d'une cellule déjà enregistrée il peut se pré-localiser, avec une précision certes moins bonne. En effet dans ce cas, la cellule dans laquelle se situe l'utilisateur peut être identifiée par le champ 33 codant une aire qui regroupe plusieurs cellule dont cette cellule en particulier. Cela signifie que le code LAC de la cellule concernée est commun à d'autres cellules dont la position est déjà enregistrée. Par l'intermédiaire du code LAC de la cellule dans laquelle il se trouve, l'utilisateur peut donc déterminer sa position, la précision étant celle de l'aire identifiée par ce code LAC. Dans ce cas l'étape de pré-localisation 23 peut-être complétée, lorsque le téléphone mobile n'a pas détecté l'identité CI de sa cellule, par une recherche du code LAC de sa cellule est déjà enregistré. Cet exemple montre avantageusement que selon les cas l'identifiant utilisé pour la pré-localisation peut être l'identité numérique d'une cellule mais aussi l'identité numérique, ou code LAC, du regroupement de cellule qui la contient.

Il a été indiqué que la base de données 24 pouvait être stockée dans un serveur, par exemple accessible par Internet. Elle peut aussi être avantageusement stockée dans le téléphone mobile 4 lui-même. Dans ce cas, chaque téléphone mobile remplit sa base de données 24 tout au long des déplacements et des recherches de positionnement qu'il effectue. La base n'a plus l'aspect collaboratif mais elle est immédiatement accessible et indépendante. Une mémoire implantée dans un téléphone mobile peut supporter une telle base de données. En effet si on considère le cas d'un pays ayant une surface équivalente à la surface de la France par exemple, un réseau de téléphonie mobile comporte environ 10 000 cellules. Cette mémoire peut comporter facilement 10 000 enregistrements. En supposant que chaque enregistrement occupe par exemple 6 octets, l'espace nécessaire est seulement de 60 000 octets.

Si la base de donnée n'est pas stockée dans les téléphones mobiles, elle peut donc être stockée dans un serveur accessible par ces téléphones. Dans ce cas un système de pré-localisation selon l'invention comporte par exemple ce serveur et au moins un téléphone mobile équipé d'un récepteur de radio-navigation par satellite.
Le système de positionnement par satellite utilisé peut être par exemple le système GPS ou le futur système GALILEO.

Une fois la pré-localisation réalisée, les calculs de localisation peuvent être effectués dans les téléphones mobiles ou dans le serveur. Si le calcul de location est effectué dans un téléphone mobile, celui-ci peut retransmettre au serveur sa position exacte.

La mise en oeuvre de l'invention a été décrite avec un téléphone mobile, elle peut bien sûr être mise en oeuvre avec tous types de terminaux de téléphonie mobiles.

## Revendications

1. Procédé de pré-localisation pour l'aide à la localisation d'un terminal de radio-navigation par satellites (2) utilisant les services d'un réseau de communication cellulaire (3), **caractérisé en ce que** la pré-localisation consistant à localiser le terminal dans au moins une cellule du réseau, il comporte au moins :
- une phase de réalisation (21, 22) d'une base de données (24) compilant des informations de localisations des cellules du réseau fournies par les terminaux (4) du réseau cellulaire, cette base comportant pour chaque cellule au moins un identifiant (30) et une information sur sa localisation ;
- une phase de pré-localisation (23) du terminal en fonction de son identifiant et des informations contenues dans la base de données.

2. Procédé selon la revendication 1, **caractérisé en ce que** la phase de réalisation de la base de données comporte une étape de collecte (21) des informations de localisation, une information de localisation d'un terminal (4) étant fournie à la base de données (24) par ce terminal avec l'identifiant (30) de la cellule (5) qui le contient.

3. Procédé selon l'une quelconque des revendications précédentes, **caractérisé en ce que** dans la phase de pré-localisation, l'identifiant (30) de la cellule (5) contenant le terminal est comparé avec les identifiants stockés dans la base de données (24), le terminal étant pré-localisé dans la cellule dont l'identifiant de la base est égal à l'identifiant (30).

4. Procédé selon la revendication 3, **caractérisé en ce qu'**un identifiant comportant l'identité numérique CI (34) de la cellule (5) et l'identité numérique LAC (33) d'un groupement de cellules incluant cette cellule (5), la phase de pré-localisation compare l'identité LAC (33) du groupement de la cellule (5) avec les identités LAC de regroupement stockés dans la base de données, le terminal étant pré-localisé dans un groupement de cellules dont l'identité LAC est égale à l'identité LAC (33) de regroupement de sa cellule.

5. Procédé selon l'une quelconque des revendications précédentes, **caractérisé en ce que** la base de données (24) est stockée dans le terminal (4).

6. Système de pré-localisation pour l'aide à la localisation comportant un terminal de téléphonie mobile utilisant les services d'un réseau de communication cellulaire (3), ledit terminal (4) équipé d'un récepteur de radio-navigation par satellites (2), **caractérisé en ce qu'**il comporte une base de données (24) compilant des informations de localisations de cellules du réseau fournies par les terminaux du réseau cellulaire, cette base comportant au moins pour chaque cellule un identifiant (30) et une information sur sa localisation, le terminal (4) déterminant sa pré-localisation en fonction de son identifiant et des informations contenues dans la base de données.

7. Système selon la revendication 6, **caractérisé en ce qu'**une information de localisation d'un terminal du réseau de communication cellulaire est fournie par ce terminal à la base de données (24) avec l'identifiant (30) de la cellule (5) qui le contient.

8. Système selon l'une quelconque des revendications 6 ou 7, **caractérisé en ce que** pour le calcul de la pré-localisation, le terminal (4) compare l'identifiant (30) de la cellule (5) contenant le terminal (4) avec les identifiants stockés dans la base de données (24), le terminal étant pré-localisé dans la cellule dont l'identifiant de la base est égal à l'identifiant (30).

9. Système selon la revendication 8, **caractérisé en ce qu'**un identifiant comportant l'identité numérique CI (34) de la cellule (5) et l'identité numérique LAC (33) d'un groupement de cellules incluant cette cellule (5), pour le calcul de pré-localisation, le terminal (4) compare l'identité LAC (33) du groupement de sa cellule (5) avec les identités LAC de regroupement stockés dans la base de données, le terminal étant pré-localisé dans un groupement de cellules dont l'identité LAC est égale à l'identité LAC (33) de regroupement de sa cellule.

10. Système selon l'une quelconque des revendications 6 à 9, **caractérisé en ce que** la base de données (24) est stockée dans le terminal (4).

11. Terminal de téléphonie mobile utilisant les services d'un réseau de communication cellulaire, équipé d'un récepteur de radio-navigation par satellites, **caractérisé en ce qu'**il comporte une base de données (24) compilant des informations de localisations de cellules du réseau fournies par le terminal, cette base comportant au moins pour chaque cellule un identifiant (30) et une information sur sa localisation, le terminal (4) déterminant sa pré-localisation en fonction de son identifiant et des informations contenues dans la base de données.

12. Terminal selon la revendication 11, **caractérisé en ce qu'**il fournit une information sur sa localisation à la base de données (24) avec l'identifiant (30) de la cellule (5) qui le contient.

13. Terminal selon l'une quelconque des revendications 10 ou 11, **caractérisé en ce que** pour le calcul de la pré-localisation, il compare l'identifiant (30) de la cellule (5) contenant le terminal (4) avec les identifiants stockés dans la base de données (24), le terminal étant pré-localisé dans la cellule dont l'identifiant de la base est égal à l'identifiant (30).

14. Système selon la revendication 8, **caractérisé en ce qu'**un identifiant comportant l'identité numérique CI (34) de la cellule (5) et l'identité numérique LAC (33) d'un groupement de cellules incluant cette cellule (5), pour le calcul de pré-localisation, le terminal (4) compare l'identité LAC (33) du groupement de sa cellule (5) avec les identités LAC de regroupement stockés dans la base de données, le terminal étant pré-localisé dans un groupement de cellules dont l'identité LAC est égale à l'identité LAC (33) de regroupement de sa cellule.
